# EUROPEAN PATENT APPLICATION

(11) **EP 4 737 097 A1**
(43) Date of publication of application: **06.05.2026**
(21) Application number: 25211288.3
(22) Date of filing: 27.10.2025
(51) Int. Cl.: B29C 51/42, B29C 51/10, B29C 51/02, B29C 48/07, B29C 48/00, B29C 49/64, B29C 51/14

(54) **PROCESSING METHOD**

(30) Priority: 30.10.2024 IT 202400024360
(71) Applicant: Solera-Thermoform Group SpA, Fucecchio (FI) (IT)
(72) Inventor: ALDINIO-COLBACHINI, Daciano, 36047 MONTEGALDA (VI) (IT); SCHIAVO, Fabio, 35036 Montegrotte Terme (IT)
(74) Representative: Lunati & Mazzoni S.r.L.

(57) **Abstract**

Method for processing a semi-finished product (2) by hot forming, to produce a manufactured article (1), the semi-finished product (2) being made of a polymeric material having a degradation temperature and a minimum processing temperature for hot forming; comprising a surface (2a), defining the portion of the semi-finished product that is in contact with the outside, and a core (2b) defining the internal portion of the semi-finished product (2) at a greater distance from the surface (2a), the method comprising: a heating phase of the semi-finished product (2) up to a maximum temperature; a forming phase, subsequent to the heating phase, wherein the semi-finished product (2) undergoes forming to produce an intermediate product; a cooling phase wherein the intermediate product is transformed into the manufactured article (1), the heating phase comprises: a first heating sub-phase, wherein the heating power has a substantially constant first value from the start of the heating up to a first predetermined temperature of the surface (2a) of the semi-finished product (2); and a second heating sub-phase subsequent to the first heating sub-phase, wherein the heating power has a substantially constant second value, which is lower and between 5% and 40% of the first value; at the end of the heating phase: the temperature of the surface (2a) is equal to the maximum temperature; the maximum temperature being lower than the degradation temperature of the material of the semi-finished product (2); the temperature of the core (2b) is higher than said minimum processing temperature of the material; the temperature gradient between the surface (2a) and the core (2b) is lower than the difference between the maximum temperature and the minimum processing temperature.

## Description

The present invention relates to a processing method of the type specified in the preamble to the first claim.

The object of the present invention is a processing method which finds application in the field of material processing and primarily, but not exclusively, in the field of polymeric material processing.

Currently, processing techniques for semi-finished products that allow for the making of manufactured articles are known. In detail, these processing techniques may include molding methods. In these techniques, the material can be inserted into a mold and undergoes to a deformation process that allows the material to acquire the desired shape of the mold.

These techniques can be hot or cold, depending on the values of the process temperatures. For example, a hot molding process is the injection molding, wherein the material, typically polymeric, is melted and injected into the mold until its internal cavity is filled, then cooled and extracted from the mold. Another molding technique is under vacuum thermoforming, wherein a sheet of polymeric material is laid on the mold by means of a vacuum. The sheet is heated by heating elements (typically lamps) and rendered malleable so that it can be deformed. The vacuum created within the mold draws the sheet towards the mold and deforms it so that it adheres to the mold until it takes the shape thereof. At the end of the forming, the manufactured article thus obtained then undergoes a controlled cooling and is extracted from the mold.

The known techniques described include some significant drawbacks.

In particular, they can result in the alteration of the material being processed if it is operated under suboptimal conditions, leading to a deterioration in the quality of the final product obtained.

In this situation, the technical task underlying this invention is to devise a processing method capable of substantially overcoming at least part of the aforementioned drawbacks.

Within said technical task, an important purpose of the invention is to obtain a processing method that can make the processing method more efficient.

Another important purpose of the invention is to create a processing method that allows to prevent alterations in the material to be processed.

The technical task and the specified aims are achieved by a processing method as claimed in the annexed claim 1. Preferred technical solutions are highlighted in the dependent claims.

The characteristics and advantages of the invention are clarified below by the detailed description of preferred embodiments of the invention, with reference to the accompanying figures, in which:

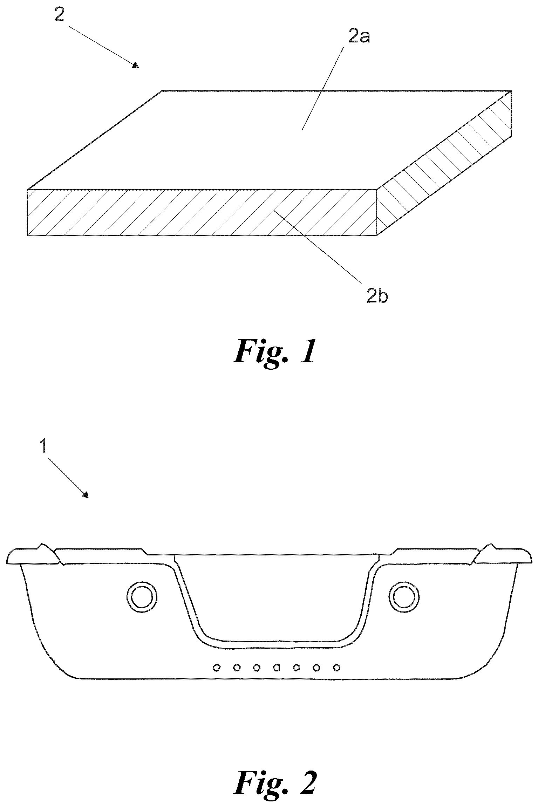

**Fig. 1** shows a semi-finished product subjected to the processing method according to the invention; and
**Fig. 2** illustrates a product made by the processing method according to the invention.

In this document, measurements, values, shapes, and geometric references (such as perpendicularity and parallelism), when associated with words like "approximately" or other similar terms such as "about" or "substantially", are to be understood as subject to measurement errors or inaccuracies due to production and/or manufacturing errors and, above all, subject to a slight deviation from the value, measurement, shape, or geometric reference to which it is associated. For example, such terms, if associated with a value, preferably indicate a deviation not exceeding 10% of the value itself.

Moreover, when used, terms like "first", "second", "upper", "lower", "main", and "secondary" do not necessarily identify an order, priority of relation, or relative position but may simply be used to more clearly distinguish between different components.

Unless otherwise specified, as apparent from the following description, terms such as "processing", "computing", "determination", "computation", or similar refer to the action and/or processes of a computer or similar electronic computation device that manipulates and/or transforms data represented as physical quantities, such as electronic magnitudes of records of a computing system and/or memories into other data similarly represented as physical quantities within computer systems, records, or other storage, transmission, or information display devices.

The measurements and data reported in this text are to be considered, unless otherwise indicated, as performed in International Standard Atmosphere ICAO (ISO 2533:1975).

With reference to the figures, the article made by means of the processing method according to the invention is globally indicated with the number **1.** It can be an article that can be used, for example, for the assembly of automotive parts. Alternatively, it may be a food storage product, such as food trays. The article 1 may be a manufactured article intended for use as a commodity.

The method according to the invention is a processing method for a semi-finished product **2.** In particular, it can be a processing method by hot forming, to produce a manufactured article 1. In detail, the processing method may preferably include a vacuum thermoforming. By means of this technique, it is advantageously possible to realize article 1 with lower energy costs.

Semi-finished product 2 is the starting object that can be transformed into manufactured article 1.

In detail, semi-finished product 2 can preferably be a sheet. In particular, the conformation of semi-finished product 2 as a sheet is advantageous since it allows for easy execution of a processing method such as hot forming and particularly vacuum thermoforming.

The sheet has preferably a thickness between 1 mm and 10 mm. More preferably, it can have a thickness between 2 and 9 mm. These thickness values are advantageous especially when the processing method is vacuum thermoforming. In general, the processing method can also be extended to semi-finished products 2 having thicknesses greater than 10 mm.

Semi-finished product 2 can preferably be made of a polymeric material. In fact, polymeric materials advantageously allow processing to be carried out at lower temperatures than other classes of materials, resulting in lower energy costs, as well as making strong and ductile articles 1.

For example, semi-finished product 2 may include a thermoplastic polymeric material. For example, it may include ABS, polystyrene, high-impact polyethylene, coextruded materials composed of multiple polymers, etc.

The polymeric material has a degradation temperature. It is the temperature for which, for material temperature values corresponding to it or higher, the material undergoes a chemical transformation. Therefore it is a temperature that results in the alteration of the material and does not allow the intended article 1 to be obtained. In addition, the polymeric material can have a minimum processing temperature for hot forming. In this way, an optimal temperature range can be identified to carry out the processing method.

Semi-finished product 2 includes a surface **2a.** It defines the part of the semi-finished product bordering the outside. In addition, semi-finished product 2 includes a core **2b.** It defines the inner part of the semi-finished product 2 furthest from the surface 2a.

In general, the method includes a heating phase, a forming phase and a cooling phase.

In detail, in the heating phase, semi-finished product 2 is heated to a maximum temperature. Even more specifically, the maximum temperature can be the temperature of at least one surface 2a. They can be measured during the processing method using a temperature gauge, for example, a pyrometer or similar. Therefore, you can make the heating phase last until the maximum temperature is measured.

If the processing method is vacuum thermoforming, in the heating phase, the semi-finished product 2 can be heated by infrared lamps by radiation. In particular, the sheet can be placed on the opening of a chamber in which there is a mold. For example, the sheet can be constrained to the edge of the opening in such a way as to obstruct the opening. Infrared lamps may be present on the outside of the opening and inside. The sheet can then be heated on both opposite surfaces 2a. In this way, the semi-finished product 2 can be irradiated more uniformly.

In detail, the heating phase comprises advantageously a first heating sub-phase. At this stage, the heating power can preferably have a basically constant first value. The maximum heating power can preferably correspond to the total power of the lamps or part of it. In particular, in the heating phase, the heating power may preferably have variable trend. In addition, the average powers can be constant in each sub-phase.

For example, in the heating phase the heating power may preferably have a sinusoidal or wave train pattern with average power in the heating sub-phase. For example, the first constant value may be the average value of the time trend of heating power in the first heating sub-phase.

Therefore, the heating power can have a basically constant value from the beginning of heating to a first predefined surface temperature 2a of the semi-finished product 2.

For example, the first predetermined temperature may preferably have a value corresponding to a predetermined percentage of the maximum temperature or a percentage of the temperature range from the starting temperature to the predetermined maximum temperature. Therefore, you can choose the maximum temperature and choose the first predetermined temperature as a fraction of the maximum temperature to be reached. Therefore, you can set the first predetermined temperature as the termination temperature of the first heating sub-phase. Accordingly, the duration of the first heating sub-phase corresponds to the time it takes the surface 2a to reach a temperature equal to the first predetermined temperature.

The first predetermined temperature may preferably be a phase transition temperature of the polymeric material. For example, the phase transition may be the glass transition, and the phase transition temperature may correspond with the glass transition temperature of the polymeric material. This may be a possible alternative criterion for defining the first predetermined temperature.

The first value of the first heating power can be determined at least according to the type of material and the size of the semi-finished product 2.

The heating phase includes a second heating sub-phase. It is preferably subsequent to the first heating sub-phase. For example, the second heating sub-phase can be started when the material of semi-finished product 2 reaches the first predetermined temperature. For example, the first heating sub-phase and the second heating sub-phase can be essentially consecutive. Therefore, it is possible to start the second heating sub-phase immediately after the end of the first heating phase. In detail, the second heating sub-phase can be started when the temperature value settles on the value set for the second sub-phase. Therefore, this can occur with an interval of time that essentially stops the heating process of the semi-finished product. In addition, the method may include an interruption phase, in which the semi-finished product may not be subjected to heating after the end of the first heating sub-phase and before the second heating sub-phase. This can allow the instrumentation to be able to settle down to the experimental conditions of the second heating sub-phase. In the second heating sub-phase, the heating power can preferably have a second essentially constant value. In the second heating sub-phase, the heating power can also have a variable trend. In particular, the heating power in the second heating sub-phase can also have a sinusoidal or wave train pattern. Therefore, the second value of heating power can also be a constant average value. Therefore, the power can be variable in the sub-phases. In addition, the power can have a sinusoidal or wave train pattern in the sub-phases.

In general, the heating power preferably has a second value lower than the first value. In addition, the second value may preferably be between 5% and 40% of the first value. In addition, the ratio of the second value to the first value may preferably be between 25% and 35% of the first value. More preferably, it may be between 27% and 32%.

These values of the heating power of the first and second heating sub-phases allow the process to be carried out under conditions that can reduce energy consumption or durations, or improve processing conditions resulting in improved properties of the manufactured article 1.

Preferably, at the end of the heating phase, the temperature of surface 2a is equal to the maximum temperature. Therefore, the heating phase ends when the temperature of surface 2a reaches the maximum temperature.

In detail, at the end of the heating phase, the maximum temperature is lower than the material degradation temperature of the semi-finished product 2.

Temperature detection can be carried out at surface 2a. As a result, the detected temperature may correspond to the surface temperature 2a. Knowing the material and the degradation temperature, it is then advantageously possible to make the maximum temperature lower than the degradation temperature. In particular, the maximum temperature of surface 2a is lower than the degradation temperature.

In addition, the core temperature 2b may be higher than the minimum processing temperature of the material. In fact, since semifinished product 2 has a temperature gradient from surface 2a to core 2b it is necessary that the temperature of core 2b is high enough to allow processing of semifinished product 2. Specifically, the temperature gradient between surface 2a and core 2b is less than the difference between the maximum temperature and the minimum processing temperature.

If the semifinished product 2 is a sheet, the two main surfaces 2a may be subjected to different temperature gradients when exposed to heating powers having different values. In general, in order for semifinished product 2 to be processable, core 2b can be raised to a high enough temperature to ensure that semifinished product 2 is processable at the end of the second heating sub-phase.

Therefore, both surface 2a and core 2b, at the end of the heating phase, are in a temperature range between the processability temperature and the material degradation temperature of semifinished product 2. In this way, processing time and/or energy costs can be advantageously reduced. It also avoids the risk of the material degrading, resulting in the emission of toxic substances.

The choice of power values and temperature thresholds for switching from one phase to another have the advantage of making the heating process of the various layers of the semifinished product 2 more uniform. In addition, depending on the parameters and thresholds chosen, one can make the process shorter or less energy intensive.

The method includes a forming phase. This phase follows the heating phase. In particular, semi-finished product 2 can be subjected to forming to make an intermediate product. The latter is the product obtained from the forming process, already having the structure of article 1 and requiring further process phases to be transformed into article 1.

For example, if the method is vacuum thermoforming, in the forming phase the semifinished product 2 undergoes swelling due to the blowing of air to stretch the layers of semifinished product 2. Following the swelling, by vacuum suction, the semi-finished product 2 is attracted and made to adhere to its surface so as to give it its profile.

Once the deformation is completed, the semi-finished product 2 is transformed into the intermediate product.

Thus, the processing method has the advantage of allowing efficient deformation of the semi-finished product 2 since processing times are reduced and temperatures are optimized so as to reduce the energy consumption associated with the process.

In detail, in the forming phase, the heating power can preferably be zero. In fact, forming takes place without further heating of the semi-finished product 2, taking advantage of the thermal energy that semi-finished product 2 has accumulated during the heating phase. In this way, deformation of the semi-finished product 2 can be carried out in such a way that temperatures are optimal and there is no alteration of the material. In addition, the decrease in temperature promotes the transformation of semi-finished product 2 into intermediate product obtained at the end of the forming phase.

The method includes a cooling of the intermediate product phase. It can be a phase following the forming phase. Specifically, it is the phase where the intermediate product is transformed into the manufactured article 1. In detail, at this stage, the temperature of the intermediate product gradually decreases so as to realize the transformation of the intermediate product into article 1.

During the cooling phase, the intermediate product may be subjected to cooling through the use of fans or other cooling elements.

The processing method according to the invention achieves important advantages. In fact, the processing method allows for shorter process times. Therefore, through the sequence of phases and associated heating power values, it is possible to reduce the execution time of the entire machining process. Therefore, it is possible to make an article 1 that has similar mechanical properties to processes of longer duration.

In addition, the processing method allows the advantage of making the article 1 reducing the risk of material alteration. In fact, the process is managed in such a way as to prevent burning of the material at high temperatures. It also keeps the core 2b, typically at lower temperatures than the 2a surface during heating, at a high enough temperature to still allow processing. Therefore, the method enables efficient processing, either in terms of energy cost or in terms of reduced process time.

The invention is susceptible to variations within the scope of the inventive concept defined by the claims.

Within this scope, all details can be replaced with equivalent elements, and the materials, shapes, and dimensions can be any.

## Claims

1. Method for processing a semi-finished product (2) by hot forming, to produce a manufactured article (1),
- said semi-finished product (2):
- being made of a polymeric material having a degradation temperature and a minimum processing temperature for hot forming;
- comprising a surface (2a), defining the portion of the semi-finished product that is in contact with the outside, and a core (2b) defining the internal portion of said semi-finished product (2) at a greater distance from said surface (2a),
said method comprising:
- a heating phase of said semi-finished product (2) up to a maximum temperature;
- a forming phase, subsequent to said heating phase, wherein said semi-finished product (2) undergoes forming to produce an intermediate product;
- a cooling phase wherein said intermediate product is transformed into said manufactured article (1),
and **characterized in that:**
- said heating phase comprises:
- a first heating sub-phase, wherein the heating power has a substantially constant first value from the start of said heating up to a first predetermined temperature of said surface (2a) of said semi-finished product (2); and
- a second heating sub-phase subsequent to said first heating sub-phase, wherein said heating power has a substantially constant second value, which is lower and between 5% and 40% of said first value;
- at the end of said heating phase:
- the temperature of said surface (2a) is equal to said maximum temperature;
- said maximum temperature being lower than said degradation temperature of the material of said semi-finished product (2);
- the temperature of said core (2b) is higher than said minimum processing temperature of said material;
- the temperature gradient between said surface (2a) and said core (2b) is lower than the difference between said maximum temperature and said minimum processing temperature.

2. Method according to Claim 1, wherein the ratio between said second value and said first value is between 25% and 35%.

3. Method according to any one of the preceding claims, wherein in said heating phase, said heating power varies with constant average powers in said sub-phases.

4. Method according to the preceding claim, wherein in said heating phase, said heating power varies sinusoidally or in a wave train fashion with constant average powers in said sub-phases.

5. Method according to any one of the preceding claims, wherein said first predetermined temperature is a phase transition temperature of said polymeric material.

6. Method according to any one of the preceding claims, wherein said first heating sub-phase and said second heating sub-phase are substantially consecutive.

7. Method according to any one of the preceding claims, wherein said semi-finished product (2) is made of thermoplastic polymeric material.

8. Method according to any one of the preceding claims, wherein said semi-finished product (2) is a sheet.

9. Method according to the preceding claim, wherein said sheet has a thickness between 1 mm and 10 mm.

10. Method according to any one of the preceding claims, wherein said hot forming is vacuum thermoforming.

11. Method according to any one of Claims 1-4, 6-10, wherein said first predetermined temperature has a value corresponding to a predetermined percentage of said maximum temperature.

## Amended claims

### Amended claims in accordance with Rule 137(2) EPC.

1. Method for processing a semi-finished product (2) by hot forming, to produce a manufactured article (1),
- said semi-finished product (2):
- being made of a polymeric material having a degradation temperature and a minimum processing temperature for hot forming;
- comprising a surface (2a), defining the portion of the semi-finished product that is in contact with the outside, and a core (2b) defining the internal portion of said semi-finished product (2) at a greater distance from said surface (2a), said method comprising:
- a heating phase of said semi-finished product (2) up to a maximum temperature;
- a forming phase, subsequent to said heating phase, wherein said semi-finished product (2) undergoes forming to produce an intermediate product;
- a cooling phase wherein said intermediate product is transformed into said manufactured article (1),
and **characterized in that:**
- said heating phase comprises:
- a first heating sub-phase, wherein the heating power has a substantially constant first value from the start of said heating up to a first predetermined temperature of said surface (2a) of said semi-finished product (2); and
- a second heating sub-phase subsequent to said first heating sub-phase, wherein said heating power has a substantially constant second value, which is lower and between 5% and 40% of said first value;
- at the end of said heating phase:
- the temperature of said surface (2a) is equal to said maximum temperature;
- said maximum temperature being lower than said degradation temperature of the material of said semi-finished product (2);
- the temperature of said core (2b) is higher than said minimum processing temperature of said material;
- the temperature gradient between said surface (2a) and said core (2b) is lower than the difference between said maximum temperature and said minimum processing temperature;
- wherein the ratio between said second value and said first value is between 25% and 35%.

2. Method according to any one of the preceding claims, wherein in said heating phase, said heating power varies with constant average powers in said sub-phases.

3. Method according to the preceding claim, wherein in said heating phase, said heating power varies sinusoidally or in a wave train fashion with constant average powers in said sub-phases.

4. Method according to any one of the preceding claims, wherein said first predetermined temperature is a phase transition temperature of said polymeric material.

5. Method according to any one of the preceding claims, wherein said first heating sub-phase and said second heating sub-phase are substantially consecutive.

6. Method according to any one of the preceding claims, wherein said semi-finished product (2) is made of thermoplastic polymeric material.

7. Method according to any one of the preceding claims, wherein said semi-finished product (2) is a sheet.

8. Method according to the preceding claim, wherein said sheet has a thickness between 1 mm and 10 mm.

9. Method according to any one of the preceding claims, wherein said hot forming is vacuum thermoforming.

10. Method according to any one of Claims 1-3, 5-9, wherein said first predetermined temperature has a value corresponding to a predetermined percentage of said maximum temperature.
